# EUROPÄISCHE PATENTANMELDUNG

(11) **EP 4 342 355 A2**
(43) Veröffentlichungstag der Anmeldung: **27.03.2024**
(21) Anmeldenummer: 23196055.0
(22) Anmeldetag: 07.09.2023
(51) Int. Cl.: A47L 15/24, A47L 15/42

(54) **TRANSPORTSPÜLMASCHINE MIT KAMERASYSTEM**

(30) Priorität: 16.09.2022 DE 102022123745
(71) Anmelder: Illinois Tool Works Inc., Glenview IL 60025 (US)
(72) Erfinder: HIMMELSBACH, Björn S., Glenview, Illinois, 60025 (US); SIEBERT, Marian, Glenview, Illinois, 60025 (US)
(74) Vertreter: Meissner Bolte Partnerschaft mbB

(57) **Zusammenfassung**

Die Erfindung betrifft eine Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10). Die Transportspülmaschine (1) weist ein Kamerasystem (34) auf, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder oder Ereignissen mindestens ein Bild von einem Bereich der Transportvorrichtung (2) aufzunehmen. Das Kamerasystem (34) weist mindestens eine Kamera und ein in einem Bereich des Sichtfelds der mindestens einen Kamera angeordnetes transparentes Flächenelement (40), insbesondere in Gestalt einer transparenten Glas- oder Kunststoffscheibe, auf, wobei die mindestens eine Kamera über das transparente Flächenelement (40) zumindest teil- oder bereichsweise von der Transportvorrichtung (2) und insbesondere von dem mittels des Kamerasystems (34) optisch abgedeckten Bereich der Transportvorrichtung (2) getrennt ist. Insbesondere ist erfindungsgemäß vorgesehene, dass dem transparenten Flächenelement (40) eine Heizeinrichtung zugeordnet ist zum insbesondere kontinuierlichen oder bedarfsweise Erwärmen von zumindest einem Bereich des transparenten Flächenelements (40).

## Beschreibung

Die vorliegende Erfindung betrifft allgemein das Fachgebiet des gewerblichen Spülens und insbesondere eine Transportspülmaschine.

Demgemäß betrifft die Erfindung insbesondere eine Bandtransportspülmaschine oder eine Korbtransportspülmaschine.

Transportspülmaschinen finden im gewerblichen Bereich Anwendung. Im Unterschied zu Haushaltsspülmaschinen, bei welchen das zu reinigende Spülgut während der Reinigung ortsfest in der Maschine verbleibt, findet bei Transportspülmaschinen ein Transport des Spülguts durch verschiedene Behandlungszonen der Transportspülmaschine statt.

Bei Transportspülmaschinen wird das Spülgut, wie beispielsweise Geschirr, Töpfe, Gläser, Besteck und andere zu reinigende Utensilien, durch mehrere Behandlungszonen, wie zum Beispiel mindestens eine Vorwaschzone, mindestens eine Hauptwaschzone, mindestens eine Nachwasch- bzw. Vorspülzone, mindestens eine Frischwasser-Klarspülzone und mindestens eine Trocknungszone, gefördert. Unterschiedliche Spülgutarten allerdings verlangen aufgrund ihrer Gebrauchsanwendung, ihres Verschmutzungsgrads, ihrer Form, sowie aufgrund des eingesetzten Materials unterschiedliche Behandlungsparameter für die einzelnen Prozessschritte. Bei heutigen Transportspülmaschinen wird jedoch in der Regel keine automatische Differenzierung der Spülgutarten vorgenommen, so dass die herkömmlichen Systeme oftmals als Kompromiss so ausgelegt sind, dass sie für mehrere unterschiedliche Spülgutarten verwendbar sind.

Eine Transportspülmaschine nach Art des Oberbegriffs des Patentanspruchs 1 ist zumindest dem Prinzip nach bereits allgemein aus dem Stand der Technik bekannt. Beispielsweise ist in der Druckschrift US 6,530,996 B2 eine Korbtransportspülmaschine beschrieben, bei welcher das zu reinigende Spülgut vorsortiert in Körben den jeweiligen Behandlungszonen der Korbtransportspülmaschine zugeführt wird. Bei dieser herkömmlichen Transportspülmaschine sind Sensoren vorgesehen, mit welchen die Art des zu reinigenden Spülguts indirekt ermittelt werden kann, und zwar indem ein an dem Korb angebrachtes Identifizierungsmerkmal erfasst wird. In Abhängigkeit von dem erfassten Identifizierungsmerkmal wird ein geeignetes Wasch- und/oder Spülprogramm der Transportspülmaschine ausgewählt.

Aus der Druckschrift DE 196 08 030 C1 ist eine weitere Transportspülmaschine bekannt, bei welcher je nach Art und Verschmutzung des zu reinigenden Spülguts in den einzelnen Behandlungszonen der Transportspülmaschine zusätzliche Sprühsysteme zu- oder weggeschaltet werden, um in den Behandlungszonen die Einwirkstrecke zu verändern.

Aus der Druckschrift DE 10 2005 021 101 A1 ist es bekannt, bei einer Transportspülmaschine in Abhängigkeit von der Transportgeschwindigkeit des Spülguts in der Klarspülzone der Transportspülmaschine zusätzliche Sprühdüsen ein- bzw. auszuschalten, um somit den Klarspülwasserverbrauch herabzusetzen. Dabei sind Sensoren vorgesehen, welche die Anwesenheit von Spülgut am Eingang der Transportspülmaschine erfassen, wobei das System automatisch die Transportgeschwindigkeit reduziert, wenn die Menge des in die Transportspülmaschine eintretenden Spülguts abnimmt.

Die derzeit bekannten Systeme zur automatischen Detektion und Erkennung von Spülgutarten weisen in ihrer Umsetzung jedoch verschiedene Nachteile auf.

So sind herkömmliche Systeme bislang nur ausgebildet, Gläser und Besteck zu erkennen, wenn diese Spülgutarten in speziell kodierten Gläser- bzw. Besteckkörben bereitgestellt werden. Hierzu sind die Körbe mit Magneten kodiert und werden dann durch jeweils einen magnetischen Sensor erkannt.

Der Nachteil an diesem Ansatz besteht darin, dass hierfür speziell kodierte Spülkörbe notwendig sind, und falls diese vom Betreiber der Spülmaschine nicht verwendet werden, ist eine Detektion nicht möglich.

Stark verschmutztes Spülgut, wie Töpfe, Backbleche oder GN-Behälter, bestehen in der Regel aus Metall. Diese werden bei den herkömmlichen Ansätzen durch einen induktiven Sensor am Maschinenzulauf detektiert.

Der Nachteil besteht hier jedoch darin, dass der maximal mögliche Schaltabstand bei dieser Art von Sensoren limitiert ist, und es somit nur möglich ist, Spülgut zu erkennen, welches ganz an dem Rand des Transportbands positioniert wird. Eine korrekte Funktion ist somit auch hier nur gewährleistet, wenn das Spülpersonal zuvor entsprechend geschult wurde.

Somit bleibt festzuhalten, dass mit den derzeit bekannten Systemen zur Spülguterkennung kein fehlerfreier Betrieb und insbesondere keine fehlerfreie Detektion sichergestellt ist. Zudem sind zur Detektion verschiedener Spülgutarten mehrere Sensoren notwendig, wodurch das ganze System relativ aufwendig und teuer wird.

Durch die vorliegende Erfindung soll die Aufgabe gelöst werden, eine Transportspülmaschine bereitzustellen, welche mindestens eine Waschzone und mindestens eine Klarspülzone aufweist, und welche trotz Reduzierung des Verbrauchs an Ressourcen (Frischwasser, Chemikalien und Energie) im Betrieb für alle Spülgutarten gute Behandlungsergebnisse bereitstellen kann.

Insbesondere soll eine Spülguterkennung bei der Transportspülmaschine vereinfacht werden, wobei gleichzeitig die Fehleranfälligkeit der Spülguterkennung reduziert ist, und wobei insbesondere keine besonderen Maßnahmen seitens des Spülpersonals vorzunehmen sind, um die Spülgutdetektion zu gewährleisten.

Insbesondere soll für eine Transportspülmaschine eine optimierte Spülguterkennung angegeben werden, bei welcher die Fehleranfälligkeit der Spülguterkennung reduziert ist, wobei insbesondere keine besonderen Maßnahmen seitens des Spülpersonals vorzunehmen sind, um die Spülgutdetektion zu gewährleisten.

Diese Aufgabe wird erfindungsgemäß durch den Gegenstand des unabhängigen Patentanspruchs 1 gelöst, wobei vorteilhafte Weiterbildungen in den abhängigen Ansprüchen angegeben sind.

Demgemäß betrifft die Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone.

Im Hinblick auf eine optimierte und insbesondere vereinfachte Spülguterkennung ist bei der erfindungsgemäßen Transportspülmaschine vorgesehen, dass diese ein Kamerasystem aufweist, welches ober- oder unterhalb der oder seitlich zur Transportvorrichtung angeordnet und ausgebildet ist, vorzugsweise kontinuierlich oder zu vorab festgelegten oder festlegbaren Zeiten und/oder oder Ereignissen mindestens ein Bild von einem Bereich der Transportvorrichtung aufzunehmen.

Das Kamerasystem weist hierzu mindestens eine Kamera und ein in einem Bereich des Sichtfelds der mindestens einen Kamera angeordnetes transparentes Flächenelement auf, welches insbesondere in Gestalt einer transparenten Glas- oder Kunststoffscheibe ausgeführt ist. Die mindestens eine Kamera des Kamerasystems ist über das transparente Flächenelement zumindest teil- oder bereichsweise von der Transportvorrichtung und insbesondere von dem mittels des Kamerasystems optisch abgedeckten Bereich der Transportvorrichtung getrennt.

Insbesondere ist in diesem Zusammenhang vorgesehen, dass dem transparenten Flächenelement eine Heizeinrichtung zugeordnet ist, um insbesondere kontinuierlich oder bedarfsweise zumindest einen Bereich des transparenten Flächenelements zu erwärmen.

Das Vorsehen einer dem transparenten Flächenelement zugeordneten Heizeinrichtung liefert entscheidende Vorteile, die sich positiv auf die reduzierte Fehleranfälligkeit der mit Hilfe des Kamerasystems erzielbaren Spülguterkennung ausübt. Indem das transparente Flächenelement zumindest bereichsweise erwärmbar ist, ist erreichbar, dass die Bildaufnahme des Kamerasystems nicht durch Kondensation qualitativ verschlechtert wird. Darüber hinaus liefert das transparente Flächenelement einen wirksamen Schutz der mindestens einen Kamera des Kamerasystems.

Gemäß bevorzugten Realisierungen der erfindungsgemäßen Transportspülmaschine ist vorgesehen, dass die Transportspülmaschine eine der Heizeinrichtung zugeordnete Steuereinrichtung aufweist, welche ausgebildet ist, die Heizeinrichtung derart anzusteuern, dass das transparente Flächenelement auf eine Temperatur erwärmt wird, die oberhalb der im Bereich des Kamerasystems herrschenden charakteristischen Kondensationstemperatur liegt.

Als Kondensationstemperatur bezeichnet man die Temperatur, ab der ein Stoff (hier Wasser) bei einem gegebenen Druck kondensiert, das heißt vom gasförmigen in den flüssigen Aggregatzustand übergeht. Der Kondensationspunkt entspricht bei der Kondensation von Wasser in Luft dem Taupunkt, welcher jene Temperatur bezeichnet, bei der die Luft mit Wasserdampf gesättigt ist.

Dadurch, dass mit Hilfe der Heizeinrichtung das Flächenelement auf eine Temperatur erwärmt wird, die oberhalb der charakteristischen Kondensationstemperatur liegt, ist eine Ansammlung von Kondensat im optischen Bereich des Kamerasystems wirksam verhindert. Ohne eine solche Heizeinrichtung würde durch aufsteigende Wrasen im Zulaufbereich der Transportspülmaschine Wasser an dem transparenten Flächenelement vor der Kamera kondensieren. Dies würde zunehmend zur Einschränkung der Kamerasicht führen und eine Bildunschärfe bis hin zur Unkenntlichkeit der Objekte verursachen. Besonders ausgeprägt ist dies in Standby-Phasen der Transportspülmaschine und bei großen Objekten, welche die Maschinenvorhänge lange und weit öffnen.

Gemäß bevorzugten Ausführungsformen der erfindungsgemäßen Transportspülmaschine ist vorgesehen, dass das Kamerasystem mindestens einen Temperatursensor aufweist zum Erfassen einer Temperatur des Flächenelements, wobei der mindestens eine Temperatursensor vorzugsweise Teil eines Regelkreises ist, mit welchem die Temperatur des Flächenelements auf eine oberhalb einer im Bereich des Kamerasystems und insbesondere im Bereich des Flächenelements herrschenden charakteristischen Kondensationstemperatur liegenden Temperatur eingestellt wird.

Bei dieser Weiterbildung handelt es sich somit um eine besonders effektive aber dennoch einfach aufgebaute Lösung, um mit geringem Aufwand an Ressourcen die Bilderfassung des Kamerasystems auch über eine längere Zeit optimal aufrechtzuerhalten.

Gemäß bevorzugten Realisierungen des Kamerasystems der erfindungsgemäßen Transportspülmaschine ist vorgesehen, dass das transparente Flächenelement als eine thermisch vorgespannte Glasscheibe, insbesondere als Einscheiben-Sicherheitsglas, ausgeführt ist. Selbstverständlich kommen hier aber auch andere Realisierungen für das transparente Flächenelement in Frage.

Thermisch vorgespannte Glasscheiben zeichnen sich durch eine erhöhte Temperatur-, Stoß- und Schlagfestigkeit im Vergleich zu normalem Flachglas aus. Darüber hinaus weist thermisch vorgespanntes Glas den Vorteil auf, dass es beim Bruch in kleine kompakte Würfelstücke zerfällt, wodurch die Gefährdung durch Schnitt- und Stoßverletzungen wirksam reduziert wird.

Gemäß Ausführungsformen des Kamerasystems der erfindungsgemäßen Transportspülmaschine ist vorgesehen, dass das transparente Flächenelement insbesondere als eine zumindest teil- oder bereichsweise transparente Glasscheibe, insbesondere aus einem thermisch vorgespanntem Glas, ausgeführt ist, wobei die Heizeinrichtung eine auf dem Flächenelement und insbesondere auf einer in Richtung der Transportvorrichtung zugewandten Oberfläche des Flächenelements aufgedampfte oder dergleichen aufgebrachte Metallschicht aufweist. Eine derartig metallisch bedampfte Glasscheibe verwirklicht somit die Integration einer unsichtbaren Heizung mit dem Vorteil einer gleichmäßigen Temperaturverteilung, wobei die Glasscheibe nach wie vor flächig durchsichtig ist.

Alternativ oder zusätzlich zu einer metallisch bedampften Glasscheibe ist es denkbar, als Heizeinrichtung einen auf einer Oberfläche des Flächenelements angeordneten und insbesondere aufgeklebten Folienheizkörper zu verwenden. Diese Ausgestaltung hat den Vorteil, dass ein Kamerasystem ggf. nachträglich mit einer entsprechenden Heizeinrichtung ausgerüstet werden kann.

In vorteilhafter Weise sollte der Folienheizkörper einen an das Sichtfeld der mindestens einen Kamera angepassten Fensterbereich aufweisen, der derart ausgeführt ist, dass er an das Sichtfeld der mindestens einen Kamera so angepasst ist, dass durch den Fensterbereich mit Hilfe der mindestens einen Kamera das mindestens eine Bild von dem Bereich der Transportvorrichtung aufnehmbar ist.

Um eine besonders geschützte Lösung für das Kamerasystem zu gewährleisten, ist gemäß Weiterbildungen der erfindungsgemäßen Lösung vorgesehen, dass die mindestens eine Kamera des Kamerasystems ein entsprechendes Gehäuse aufweist, in welchem die mindestens eine Kamera insbesondere zumindest teil- oder bereichsweise hermetisch von der Außenatmosphäre abgeschottet aufgenommen ist.

Insbesondere im Zusammenhang mit dem der mindestens einen Kamera des Kamerasystems zugeordneten Gehäuse ist es denkbar, dass das Kamerasystem in oder - in Transportrichtung der Transportvorrichtung gesehen - vor einem Einlauftunnel der Transportspülmaschine vorzugsweise lös- oder austauschbar angeordnet ist.

Der von dem Kamerasystem kontinuierlich oder zu vorab festgelegten oder festlegbaren Zeiten und/oder Ereignissen überwachte Bereich der Transportvorrichtung sollte vorzugsweise - in Transportrichtung der Transportvorrichtung gesehen - stromaufwärts der mindestens einen Waschzone vorliegen und vorzugsweise innerhalb eines Einlauftunnels der Transportspülmaschine.

Mit anderen Worten, in bevorzugter Weise befindet sich das Kamerasystem innerhalb eines seitlich und nach oben geschlossenen Einlauftunnels der Transportspülmaschine. Auf diese Weise ist sichergestellt, dass bei der Bildaufnahme vorab festlegbare, definierte Bedingungen vorliegen.

In einer Weiterbildung des Kamerasystems ist vorgesehen, dass dem Kamerasystem eine insbesondere mit der Bildaufnahme des Kamerasystems synchronisierte Beleuchtungseinrichtung zugeordnet ist zum vorzugsweise definierten Aus- oder Beleuchten des Bereichs der Transportvorrichtung.

Vorzugsweise weist die Beleuchtungseinrichtung mindestens eine Lichtquelle auf, welche ausgebildet ist, insbesondere eine homogene und vorzugsweise diffuse Be- oder Ausleuchtung zumindest eines Bereichs des Bereichs der Transportvorrichtung mit Licht vorzugsweise bei einer Farbtemperatur im Hauptteil zwischen 5200 bis 5700 Kelvin zu ermöglichen.

Eine Montage des Kamerasystems mit der vorzugsweise dem Kamerasystem zugeordneten Beleuchtungseinrichtung innerhalb des Einlauftunnels der Transportspülmaschine weist entscheidende Vorteil gegenüber einer Kameraposition außerhalb des Einlauftunnels auf. Zwar wäre eine externe Montage zum Schutze des Kamerasystems ideal, allerdings ist es bei einer externen Montage des Kamerasystems relativ aufwendig, den richtigen Zeitpunkt für die Bildaufnahme zu finden. Als ein weiterer Nachteil ist der erhöhte Aufwand beim Schulen des Servicepersonals und der steigende Zeitaufwand bei der Inbetriebnahme der Spülmaschine zu nennen.

Wenn hingegen das Kamerasystem innerhalb des Einlauftunnels der Transportspülmaschine positioniert wird, ist der Zeitpunkt für die Bildaufnahme relativ einfach definierbar. Zusätzlich wird die Inbetriebnahme der Spülmaschine vor Ort nicht beeinflusst. Das Kamerasystem kann bereits im Werk fertigmontiert werden, wobei zum einen der Schulungsaufwand für das Servicepersonal nicht erhöht wird, und zum anderen der Betreiber der Spülmaschine keine längere Inbetriebnahme auf sich nehmen muss. Als weiterer großer Vorteil ist die Unabhängigkeit der Umgebungsbeleuchtung bei einer Montage des Kamerasystems innerhalb des Einlauftunnels der Transportspülmaschine anzuführen. Die Beleuchtung kann so ausgelegt werden, dass immer fest definierte Umgebungsbedingungen herrschen.

Somit bietet es sich insbesondere an, dass das transparente Flächenelement des Kamerasystems ferner derart ausgeführt ist, dass dieses dazu dient, dass die Beleuchtungseinrichtung zumindest teil- oder bereichsweise von der Transportvorrichtung und insbesondere von dem mittels des Kamerasystems optisch abgedeckten Bereich der Transportvorrichtung getrennt ist

Gemäß Realisierungen der erfindungsgemäßen Lösung ist vorgesehen, dass dem Kamerasystem eine Bildverarbeitungseinrichtung zugeordnet ist, welche ausgebildet ist zur insbesondere optionalen Vorverarbeitung eines von dem Kamerasystem aufgenommenen mindestens einen Bilds, zur Objektdetektion insbesondere mit neuronalen Netzen des insbesondere optional vorverarbeiteten Bilds und zur Merkmalextraktion und Klassifizierung von in dem Bild enthaltenen Objekten.

Insbesondere ist in diesem Zusammenhang vorgesehen, dass die Bildverarbeitungseinrichtung ausgebildet ist, nach einem modellbasierten Verfahren eine Objektdetektion mit neuronalen Netzen an dem insbesondere optional vorverarbeitete Bild vorzunehmen, wobei bei dem modellbasierten Verfahren von einer vorab festgelegten oder insbesondere maschinell einlernbaren, bestimmten Form der in dem Bild enthaltenen Objekte ausgegangen wird.

Alternativ oder zusätzlich ist die Bildverarbeitungseinrichtung ausgebildet, nach einem pixelorientierten Verfahren, nach einem kantenorientierten Verfahren, nach einem regionenorientierten Verfahren und/oder nach einem texturorientierten Verfahren eine Objektdetektion mit neuronalen Netzen an dem insbesondere optional vorverarbeitete Bild vorzunehmen, um Merkmale der in dem Bild enthaltenen Objekte im Hinblick auf Form, Größe, Lage, Ausrichtung und/oder Material zu extrahieren.

Im Folgenden wird die Erfindung mit Bezug auf die beiliegende Zeichnung anhand einer exemplarischen Ausführungsform der erfindungsgemäßen Transportspülmaschine näher beschrieben.

Es zeigt:

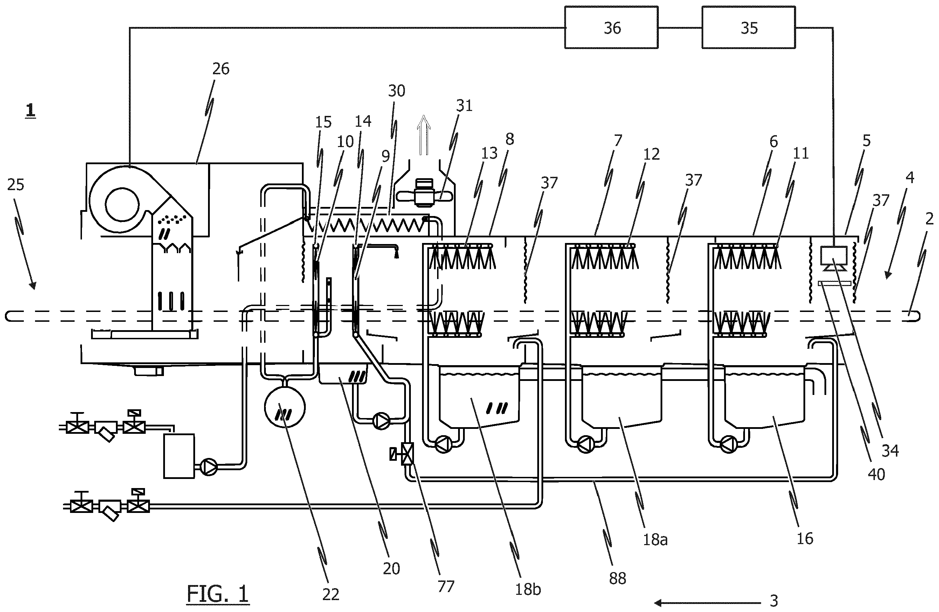

- FIG. 1: schematisch und in einer Längsschnittansicht eine Transportspülmaschine nach einer exemplarischen Ausführungsform der vorliegenden Erfindung.

FIG. 1 zeigt eine Transportspülmaschine 1 mit einer Transportvorrichtung 2 zum Transportieren von in den Zeichnungen nicht dargestelltem Spülgut in einer Transportrichtung 3 durch die Transportspülmaschine 1.

Als Transportvorrichtung 2 kommt beispielsweise ein Transportband in Frage, welches bevorzugt als mehrgliedriges Kunststofftransportband ausgebildet ist und durch einen in FIG. 1 nicht dargestellten vorzugsweise elektrischen Antrieb kontinuierlich angetrieben wird, so dass das auf das Transportband 2 aufgebrachte Spülgut durch die verschiedenen Behandlungszonen 6, 7, 8, 9, 10 und 26 der Transportspülmaschine 1 gemäß der Darstellung in FIG. 1 gefördert wird.

Üblicherweise wird das in Transportrichtung 3 transportierte Spülgut im Bereich des Einlaufes 4 auf die Transportvorrichtung bzw. das Transportband 2 aufgebracht. Entsprechend der durch den Pfeil angedeuteten Transportrichtung 3 wird dann das Spülgut vom Einlauf 4 in einen Einlauftunnel 5 transportiert.

Die Transportspülmaschine 1 gemäß der ersten Ausführungsform der vorliegenden Erfindung weist wenigstens eine Waschzone, beispielsweise wie in FIG. 1 dargestellt, eine Vorwaschzone 6, sowie eine erste Hauptwaschzone 7 und eine zweite Hauptwaschzone 8, welche in der Transportrichtung 3 gesehen nach der Vorwaschzone 6 angeordnet sind, auf.

In Transportrichtung 3 gesehen nach der wenigstens einen Waschzone 6, 7, 8 ist bei der in FIG. 1 dargestellten Transportspülmaschine 1 eine Nachwaschzone 9 und eine der Nachwaschzone 9 nachgeschaltete Klarspülzone 10 angeordnet.

In der Darstellung gemäß FIG. 1 ist die Transportvorrichtung 2 als umlaufendes Transportband dargestellt. Als Transportvorrichtung 2 sind allerdings auch Transportkörbe denkbar, in welchen das nicht explizit dargestellte Spülgut eingesetzt wird, und welche auf die Oberseite des Transportbandes aufgesetzt werden.

In Transportrichtung 3 gesehen läuft das entweder unmittelbar auf dem Transportband 2 aufgenommene Spülgut oder durch Körbe gehaltene Spülgut in der Transportrichtung 3 durch den Einlauftunnel 5, die sich daran anschließende Vorwaschzone 6, die erste Hauptwaschzone 7, die zweite Hauptwaschzone 8, die Nachwaschzone 9, die Klarspülzone 10, eine Trocknungszone 26 in eine Auslaufstrecke 25 ein.

Den genannten Behandlungszonen 6, 7, 8, 9 und 10 der Transportspülmaschine 1 sind jeweils Sprühdüsen 11, 12, 13, 14 und 15 zugeordnet, über welche Flüssigkeit auf das Spülgut gesprüht wird, das von der Transportvorrichtung 2 durch die jeweiligen Behandlungszonen 6, 7, 8, 9, und 10 transportiert wird. Jeder Behandlungszone 6, 7, 8, 9 und 10 ist ein Tank 16, 18, 20 und 22 zugeordnet, in welchem versprühte Flüssigkeit aufgenommen wird, und/oder in welchem Flüssigkeit für die Sprühdüsen der betreffenden Zonen bereitgestellt wird. Bei der in FIG. 1 dargestellten Transportspülmaschine 1 wird Klarspülflüssigkeit in Form von Frischwasser, welches rein oder mit weiteren Zusätzen, wie beispielsweise Klarspüler, versetzt sein kann, über die oberhalb und unterhalb des Transportbandes oder seitlich angeordnete Sprühdüsen 15 der Klarspülzone 10 auf das in den Zeichnungen nicht dargestellte Spülgut gesprüht.

Ein Teil der versprühten Klarspülflüssigkeit wird über ein Kaskadensystem entgegen der Transportrichtung 3 des Spülguts von Zone zu Zone transportiert. Der restliche Teil wird über ein Ventil 77 und eine Bypassleitung 88 direkt in den Vorwaschtank 16 geleitet.

Die versprühte Klarspülflüssigkeit wird in dem Tank 20 (Nachwaschtank 20) der Nachwaschzone 9 aufgefangen, von welchem sie über ein Pumpensystem zu den Sprühdüsen 14 (Nachwaschdüsen 14) der Nachwaschzone 9 gefördert wird. In der Nachwaschzone 9 wird Waschflüssigkeit von dem Spülgut abgespült. Die hierbei anfallende Flüssigkeit fließt in den Waschtank 18b der zweiten Hauptwaschzone 8, wird üblicherweise mit einem Reiniger versehen und durch ein Pumpensystem über die Düsen 13 (Waschdüsen 13) der zweiten Hauptwaschzone 8 auf das Spülgut gesprüht.

Von dem Waschtank 18b der zweiten Hauptwaschzone 8 fließt die Flüssigkeit in den Waschtank 18a der ersten Hauptwaschzone 7. Von dort aus wird die Flüssigkeit über ein weiteres Pumpensystem über die Waschdüsen 12 der ersten Hauptwaschzone 7 erneut auf das Spülgut gesprüht. Von dem Waschtank 18a der ersten Hauptwaschzone 7 fließt anschließend die Flüssigkeit in den Vorwaschtank 16 der Vorwaschzone 6. Die Flüssigkeit in dem Vorwaschtank 16 wird über ein Pumpensystem über die Vorwaschdüsen 11 der Vorwaschzone 6 auf das Spülgut gesprüht, um grobe Verunreinigungen von dem Spülgut zu entfernen.

Die einzelnen Spülsysteme der Behandlungszonen 6, 7, 8, 9 und 10 gewährleisten, dass das Spülgut sowohl von der Oberseite als auch der Unterseite abgespritzt wird.

Die jeweiligen Zonen 6, 7, 8, 9 und 10 der Transportspülmaschine 1 können über Trennvorhänge 37 voneinander getrennt sein. Bei der in FIG. 1 dargestellten Ausführungsform ist auch der Einlauftunnel 5 selber über einen Trennvorhang 37 von dem Einlauf 4 getrennt. Durch das Vorsehen der Trennvorhänge 37 wird ein Überspritzen von Waschflüssigkeit und Klarspülflüssigkeit und der Austritt von Wrasen aus der Transportspülmaschine verhindert.

An die Klarspülzone 10 schließt sich in Transportrichtung 3 des Spülguts die bereits erwähnte Trocknungszone 26 an. In der Trocknungszone 26 wird das Spülgut mit trockener und erwärmter Luft getrocknet, um die auf dem Spülgut befindliche Feuchtigkeit abzublasen bzw. abzutrocknen. Um den Feuchtigkeitsgehalt der Luft in einem für die Trocknung günstigen Bereich zu halten, ist es beispielsweise denkbar, über eine Öffnung, beispielsweise durch die Austrittsöffnung für das Spülgut, Raumluft zuzuführen. Die warme und angefeuchtete Luft wird beispielsweise mit Hilfe eines Gebläses 31 über eine weitere Öffnung aus der Trocknungszone 26 abgezogen.

Dabei ist vorteilhaft, dass der Abluftstrom aus der Trocknungszone 26 eine Einrichtung zur Wärmerückgewinnung 30 passiert, in welcher ein Kondensator vorgesehen sein kann. Die Einrichtung zur Wärmerückgewinnung 30 dient dazu, zumindest einen Teil der in der Abluft enthaltenen Wärmeenergie zurückzugewinnen.

Bei heutigen Band-/Korbtransportspülmaschinen wird das Spülgut durch mehrere Behandlungszonen, wie beispielsweise Vorwaschzonen, Hauptwaschzonen, Nachwaschzonen, Klarspülzonen und Trocknungszonen, befördert.

Wie bereits angedeutet, verlangen unterschiedliche Spülgutarten in den Behandlungszonen der Transportspülmaschine unterschiedliche Behandlungsparameter. Bei den derzeit bekannten Transportspülmaschinen erfolgt jedoch keine automatische Differenzierung der zu behandelnden Spülgutarten, so dass die herkömmlichen Systeme üblicherweise derart als Kompromiss ausgelegt werden, dass sie mehr oder weniger effizient für mehrere Spülgutarten verwendbar sind. Dieser Ansatz führt dazu, dass zur Behandlung des Spülguts in der Regel wesentlich mehr Ressourcen (Energie, Wasser, Chemie, etc.) eingesetzt werden, als dies tatsächlich notwendig wäre.

Die erfindungsgemäße Transportspülmaschine 1, wie sie beispielsweise in FIG. 1 dargestellt ist, ist dadurch gekennzeichnet, dass die Transportspülmaschine 1 ein Kamerasystem 34 aufweist, welches oberhalb der Transportvorrichtung 2 angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung 2 aufzunehmen.

Dem Kamerasystem 34 ist vorzugsweise eine Bildverarbeitungseinrichtung 35 zugeordnet, welche insbesondere ausgebildet ist zur insbesondere optionalen Vorverarbeitung des von dem Kamerasystem 34 aufgenommenen mindestens einen Bilds, zur Segmentierung des insbesondere optional vorbearbeiteten Bilds und zur Merkmalsextraktion und Klassifizierung von in dem Bild enthaltenen Objekten (Spülgutteilen).

Ferner kann gemäß Ausführungsformen eine Auswerteeinrichtung vorgesehen sein, welche ausgebildet ist, anhand der durchgeführten Klassifizierung auszuwerten und zu ermitteln, ob zum Zeitpunkt der Bildaufnahme in dem Bereich der Transportspülmaschine 1 Spülgut mindestens einer der folgenden Spülgutklassen vorhanden war:
- Besteck oder Besteckteile;
- Töpfe, Pfannen oder GN-Behälter;
- Gläser, insbesondere Trinkgläser;
- Tabletts oder tablettartige Gegenstände;
- Teller, Tassen oder Schalen;
- Utensilien;
- sonstiges Spülgut;
- gemischtes Spülgut;
- Spülgut aus Kunststoff; oder
- kein Spülgut.

Wie in FIG. 1 angedeutet, befindet sich das Kamerasystem 34 vorzugsweise innerhalb des Einlauftunnels 5 der Transportspülmaschine 1.

Die Transportspülmaschine 1 weist ferner eine in FIG. 1 schematisch dargestellte Steuereinrichtung 36 auf. Die Steuereinrichtung 36 ist insbesondere ausgelegt, unterschiedliche ansteuerbare Komponenten der Transportspülmaschine 1, wie etwa die jeweiligen Pumpen und Ventile, nach Maßgabe eines vorab festgelegten oder festlegbaren Programmablaufs anzusteuern und somit in den einzelnen Behandlungszonen der Transportspülmaschine 1 geeignete Prozessparameter einstellen zu können.

Wie in den Zeichnungen dargestellt, ist die Steuereinrichtung 36 insbesondere über eine geeignete Kommunikationsverbindung mit dem Kamerasystem 34 bzw. der Bildverarbeitungs-/Auswerteeinrichtung 35 verbunden, um kontinuierlich oder zu vorgegebenen Zeiten bzw. Ereignissen die von der Auswerteeinrichtung ermittelte Spülgutklasse des der Transportspülmaschine 1 zugeführten Spülguts abzufragen.

Unter dem hierin verwendeten Begriff "Spülgutklasse" ist eine Zusammenfassung von Spülgut unterschiedlicher Spülgutarten zu Klassen zu verstehen, welche zusammen eine Klassifikation bzw. Spülgutklasse bilden. Die Spülgutarten einer Spülgutklasse haben gemeinsam, dass diese gemäß gleicher oder ähnlicher Behandlungsparameter optimal behandelbar sind.

Das Kamerasystem 34 der in FIG. 1 schematisch gezeigten Transportspülmaschine weist mindestens eine Kamera und ein in einem Bereich des Sichtfelds der mindestens einen Kamera angeordnetes transparentes Flächenelement 40 auf. Bei dem transparenten Flächenelement 40 handelt es sich insbesondere um eine transparente Glas- oder Kunststoffscheibe, wobei in vorteilhafter Weise es sich hierbei um eine thermisch vorgespannte Glasscheibe insbesondere aus Einscheiben-Sicherheitsglas handelt.

Die mindestens eine Kamera des Kamerasystems 34 ist über das transparente Flächenelement 40 zumindest teil- oder bereichsweise von der Transportvorrichtung 2 und insbesondere von dem mittels des Kamerasystems 34 optisch abgedeckten Bereich der Transportvorrichtung 2 getrennt. Insbesondere ist in diesem Zusammenhang vorgesehen, dass zur Vermeidung einer Kondensat-Bildung dem transparenten Flächenelement 40 eine Heizeinrichtung zugeordnet ist, um insbesondere kontinuierlich oder bedarfsweise zumindest einen Bereich des transparenten Flächenelements 40 zu erwärmen.

In vorteilhafter Weise ist der Heizeinrichtung eine Steuereinrichtung 36 zugeordnet, welche ausgebildet ist, die Heizeinrichtung derart anzusteuern, dass das transparente Flächenelement 40 auf eine Temperatur erwärmt wird, die oberhalb der im Bereich des Kamerasystems 34 herrschenden charakteristischen Kondensationstemperatur liegt.

Hierzu bietet es sich an, dass das Kamerasystem 34 einen Temperatursensor aufweist, welcher ausgebildet ist, eine Temperatur des Flächenelements 40 zu erfassen. Der Temperatursensor ist vorzugsweise Teil eines Regelkreises, mit welchem die Temperatur des Flächenelements 40 auf die oberhalb einer im Bereich des Kamerasystems 34 und insbesondere im Bereich des Flächenelements 40 herrschenden charakteristischen Kondensationstemperatur liegenden Temperatur eingestellt wird.

Zur Realisierung der Heizeinrichtung kommen verschiedene Ausführungsformen in Frage.

Insbesondere ist es denkbar, dass die Heizeinrichtung eine auf dem Flächenelement 40 und insbesondere auf einer in Richtung der Transportvorrichtung 2 zugewandten Oberfläche des Flächenelements 40 angeordnet ist, welche insbesondere in Gestalt einer auf dem Flächenelement 40 aufgedampften oder dergleichen aufgebrachten Metallschicht sein kann.

Alternativ hierzu ist es denkbar, dass die Heizeinrichtung einen auf einer Oberfläche des Flächenelements 40 angeordneten Folienheizkörper aufweist. Dabei sollte der Folienheizkörper einen an das Sichtfeld der mindestens einen Kamera des Kamerasystems 34 angepassten Fensterbereich aufweisen, der derart ausgeführt ist, dass der an das Sichtfeld der mindestens einen Kamera so angepasst ist, dass durch den Fensterbereich mit Hilfe der mindestens einen Kamera das mindestens eine Bild von dem Bereich der Transportvorrichtung 2 aufnehmbar ist.

Vorzugsweise ist ein der mindestens einen Kamera des Kamerasystems 34 zugeordnetes Gehäuse vorgesehen, in welchem die mindestens eine Kamera insbesondere zumindest teil- oder bereichsweise hermetisch von der Außenatmosphäre abgeschottet aufgenommen ist.

Wie in FIG. 1 schematisch dargestellt, ist vorzugsweise vorgesehen, dass das Kamerasystem 34 in oder - in Transportrichtung der Transportvorrichtung 2 gesehen - vor einem Einlauftunnel der Transportspülmaschine vorzugsweise lös- oder austauschbar angeordnet ist.

Obgleich in FIG. 1 nicht gezeigt, bietet es sich an, dass dem Kamerasystem 34 eine insbesondere mit der Bildaufnahme des Kamerasystems 34 synchronisierte Beleuchtungseinrichtung zugeordnet ist zum vorzugsweise definierten Aus- oder Beleuchten des Bereichs der Transportvorrichtung 2.

Die Beleuchtungseinrichtung ist vorzugsweise ebenfalls in dem Gehäuse des Kamerasystems 34 aufgenommen.

Die Erfindung ist nicht auf die in FIG. 1 schematisch gezeigte Ausführungsform beschränkt, sondern ergibt sich aus einer Zusammenschau sämtlicher hierin offenbarter Merkmale.

## Patentansprüche

1. Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10),
**dadurch gekennzeichnet, dass**
die Transportspülmaschine (1) ein Kamerasystem (34) aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder oder Ereignissen mindestens ein Bild von einem Bereich der Transportvorrichtung (2) aufzunehmen, wobei das Kamerasystem (34) mindestens eine Kamera und ein in einem Bereich des Sichtfelds der mindestens einen Kamera angeordnetes transparentes Flächenelement (40), insbesondere in Gestalt einer transparenten Glas- oder Kunststoffscheibe, aufweist, wobei die mindestens eine Kamera über das transparente Flächenelement (40) zumindest teil- oder bereichsweise von der Transportvorrichtung (2) und insbesondere von dem mittels des Kamerasystems (34) optisch abgedeckten Bereich der Transportvorrichtung (2) getrennt ist, wobei dem transparenten Flächenelement (40) eine Heizeinrichtung zugeordnet ist zum insbesondere kontinuierlichen oder bedarfsweise Erwärmen von zumindest einem Bereich des transparenten Flächenelements (40).

2. Transportspülmaschine (1) nach Anspruch 1,
wobei die Transportspülmaschine (1) eine der Heizeinrichtung zugeordnete Steuereinrichtung (36) aufweist, welche ausgebildet ist, die Heizeinrichtung derart anzusteuern, dass das transparente Flächenelement (40) auf eine Temperatur erwärmt wird, die oberhalb der im Bereich des Kamerasystems (34) herrschenden charakteristischen Kondensationstemperatur liegt.

3. Transportspülmaschine (1) nach Anspruch 1 oder 2,
wobei das Kamerasystem (34) mindestens einen Temperatursensor aufweist zum Erfassen einer Temperatur des Flächenelements (40), wobei der mindestens eine Temperatursensor vorzugsweise Teil eines Regelkreises ist, mit welchem die Temperatur des Flächenelements (40) auf eine oberhalb einer im Bereich des Kamerasystems (34) und insbesondere im Bereich des Flächenelements (40) herrschenden charakteristischen Kondensationstemperatur liegenden Temperatur eingestellt wird.

4. Transportspülmaschine (1) nach einem der Ansprüche 1 bis 3, wobei das transparente Flächenelement (40) als eine thermisch vorgespannte Glasscheibe, insbesondere als Einscheiben-Sicherheitsglas, ausgeführt ist.

5. Transportspülmaschine (1) nach einem der Ansprüche 1 bis 4, wobei das transparente Flächenelement (40) insbesondere als eine zumindest teil- oder bereichsweise transparente Glasscheibe ausgeführt ist, und wobei die Heizeinrichtung eine auf dem Flächenelement (40) und insbesondere auf einer in Richtung der Transportvorrichtung (2) zugewandten Oberfläche des Flächenelements (40) angeordnet ist.

6. Transportspülmaschine (1) nach einem der Ansprüche 1 bis 5, wobei das transparente Flächenelement (40) insbesondere als eine zumindest teil- oder bereichsweise transparente Glasscheibe ausgeführt ist, und wobei die Heizeinrichtung eine auf dem Flächenelement (40) und insbesondere auf einer in Richtung der Transportvorrichtung (2) zugewandten Oberfläche des Flächenelements (40) aufgedampfte oder dergleichen aufgebrachte Metallschicht aufweist.

7. Transportspülmaschine (1) nach einem der Ansprüche 1 bis 6, wobei die Heizeinrichtung einen auf einer Oberfläche des Flächenelements (40) angeordneten Folienheizkörper aufweist.

8. Transportspülmaschine (1) nach Anspruch 7,
wobei der Folienheizkörper einen an das Sichtfeld der mindestens einen Kamera angepassten Fensterbereich aufweist, der derart ausgeführt ist, dass er an das Sichtfeld der mindestens einen Kamera so angepasst ist, dass durch den Fensterbereich mit Hilfe der mindestens einen Kamera das mindestens eine Bild von dem Bereich der Transportvorrichtung (2) aufnehmbar ist.

9. Transportspülmaschine (1) nach einem der Ansprüche 1 bis 8, wobei ein der mindestens einen Kamera des Kamerasystems (34) zugeordnetes Gehäuse vorgesehen ist, in welchem die mindestens eine Kamera insbesondere zumindest teil- oder bereichsweise hermetisch von der Außenatmosphäre abgeschottet aufgenommen ist.

10. Transportspülmaschine (1) nach einem der Ansprüche 1 bis 9, wobei das Kamerasystem (34) in oder - in Transportrichtung der Transportvorrichtung (2) gesehen - vor einem Einlauftunnel (4) der Transportspülmaschine (1) vorzugsweise lös- oder austauschbar angeordnet ist.

11. Transportspülmaschine (1) nach einem der Ansprüche 1 bis 10, wobei dem Kamerasystem (34) eine insbesondere mit der Bildaufnahme des Kamerasystems (34) synchronisierte Beleuchtungseinrichtung zugeordnet ist zum vorzugsweise definierten Aus- oder Beleuchten des Bereichs der Transportvorrichtung (2).

12. Transportspülmaschine (1) nach Anspruch 11,
wobei die Beleuchtungseinrichtung mindestens eine Lichtquelle aufweist, welche ausgebildet ist, insbesondere eine homogene und vorzugsweise diffuse Be- oder Ausleuchtung zumindest eines Bereichs des Bereichs der Transportvorrichtung (2) mit Licht bei einer Farbtemperatur im Hauptteil vorzugsweise zwischen 5200 bis 5700 Kelvin zu ermöglichen.

13. Transportspülmaschine (1) nach Anspruch 11 oder 12,
wobei das transparente Flächenelement (40) des Kamerasystems (34) ferner derart ausgeführt ist, dass über dieses die Beleuchtungseinrichtung zumindest teil- oder bereichsweise von der Transportvorrichtung (2) und insbesondere von dem mittels des Kamerasystems (34) optisch abgedeckten Bereich der Transportvorrichtung (2) getrennt ist.

14. Transportspülmaschine (1) nach einem der Ansprüche 1 bis 13, wobei dem Kamerasystem (34) eine Bildverarbeitungseinrichtung (35) zugeordnet ist, welche ausgebildet ist zur insbesondere optionalen Vorverarbeitung des von dem Kamerasystem (34) aufgenommenen mindestens einen Bilds, zur Segmentierung des insbesondere optional vorverarbeiteten Bilds und zur Merkmalextraktion und Klassifizierung von in dem Bild enthaltenen Objekten.

15. Transportspülmaschine (1) nach Anspruch 14,
wobei die Bildverarbeitungseinrichtung (35) ausgebildet ist, nach einem modellbasierten Verfahren eine Objektdetektion mit neuronalen Netzen an dem insbesondere optional vorverarbeitete Bild vorzunehmen, wobei bei dem modellbasierten Verfahren insbesondere von einer vorab festgelegten oder insbesondere maschinell einlernbaren, bestimmten Form der in dem Bild enthaltenen Objekte ausgegangen wird; und/oder
wobei die Bildverarbeitungseinrichtung (35) ausgebildet ist, nach einem pixelorientierten Verfahren, nach einem kantenorientierten Verfahren, nach einem regionenorientierten Verfahren und/oder nach einem texturorientierten Verfahren eine Objektdetektion mit neuronalen Netzen an dem insbesondere optional vorverarbeitete Bild vorzunehmen, um Merkmale der in dem Bild enthaltenen Objekte im Hinblick auf Form, Größe, Lage, Ausrichtung und/oder Material zu extrahieren.
